# FASCICULE DE BREVET EUROPEEN

(11) **EP 0 701 934 B1**
(45) Date de publication et mention de la délivrance du brevet: **04.03.1998**
(21) Numéro de dépôt: 95401735.6
(22) Date de dépôt: 21.07.1995
(51) Int. Cl.: B60S 1/04

(54) **Ensemble de balai d'essuie-glace à usure réduite en position d'arrêt, pour véhicule automobile**
Kraftfahrzeug-Scheibewischeranlage mit Einrichtung zur Verminderung des Verschleisses in der Parkstellung
Windscreen wiper assembly with reduced wear when parked, for a motor vehicle

(30) Priorité: 14.09.1994 FR 9410979
(43) Date de publication de la demande: 20.03.1996
(73) Titulaire: AUTOMOBILES PEUGEOT, 75116 Paris (FR); AUTOMOBILES CITROEN, 92200 Neuilly-sur-Seine (FR)
(72) Inventeur: Cremet, Laurent, F-70400 Hericourt (FR)
(74) Mandataire: Polus, Camille

(56) Documents cités:
- DE-C- 4 202 965
- FR-A- 1 558 826
- US-A- 5 101 531

## Description

La présente invention concerne un ensemble de balai d'essuie-glace à usure réduite en position d'arrêt, pour véhicule automobile.

On connaît déjà dans l'état de la technique un ensemble de balai d'essuie-glace pour véhicule automobile, du type comportant un balai porté par un bras d'entraînement articulé sur le véhicule et muni d'une raclette souple destinée à balayer un secteur de la surface d'une vitre du véhicule et des moyens de soulèvement du balai dans une position d'usure réduite de la raclette lorsque l'essuie-glace est à l'arrêt.

Les moyens de soulèvement du balai permettent, lorsque l'essuie-glace est à l'arrêt, de réduire la pression d'appui de la raclette souple sur la surface du pare-brise par rapport à sa pression normale d'utilisation. On évite ainsi, au cours des périodes relativement longues pendant lesquelles le véhicule est à l'arrêt, que la raclette souple soit soumise à une pression importante susceptible de la déformer.

On connaît des ensembles de balai d'essuie-glace du type ci-dessus, comportant des moyens mécaniques, en général une butée, de soulèvement du balai. Toutefois, ces systèmes étant statiques, ils soulèvent aussi le balai lorsque le véhicule est en fonctionnement, essuie-glace à l'arrêt, ce qui entraîne des vibrations génératrices de bruit.

On connaît également des ensembles de balai d'essuie-glace du même type comprenant des moyens électro-mécaniques (voir notamment FR-A-1 558 826) ou hydro-mécaniques de soulèvement du balai. Ces moyens sont complexes et coûteux à réaliser.

On connaît encore de DE-A-4 202 965 un ensemble de balai d'essuie-glace pour véhicule automobile, du type comportant un balai porté par un bras d'entraînement articulé sur le véhicule et muni d'une raclette souple destinée à balayer un secteur de la surface d'une vitre du véhicule, des moyens de soulèvement du balai dans une position d'usure réduite de la raclette lorsque l'essuie-glace est à l'arrêt, ces moyens de soulèvement comprenant des moyens de poussée comportant un piston monté coulissant dans un corps solidaire du véhicule et sollicité élastiquement par un ressort de rappel de manière à écarter de la vitre le bras de l'essuie-glace, et des moyens pneumatiques d'abaissement du balai dans une position d'utilisation, destinés à s'opposer aux moyens de poussée, ces moyens pneumatiques comprenant une chambre étanche de volume variable délimitée par le piston et le corps, dans laquelle est logé le ressort de rappel, destinée à communiquer avec une source de gaz en dépression pour solliciter le piston à l'encontre de la force de rappel du ressort.

L'invention a pour but de proposer un ensemble de balai d'essuie-glace à usure réduite en position d'arrêt, fiable, simple et d'un prix de revient relativement faible et qui n'engendre pas de vibration durant le fonctionnement du véhicule.

A cet effet l'invention a pour objet un ensemble de balai d'essuie-glace pour véhicule automobile, du type décrit dans DE-A-4 202 965, caractérisé en ce que les moyens de poussée sont agencés sur le véhicule au droit de la position d'arrêt de l'essuie-glace, le corps délimitant une butée de maintien en position d'arrêt de l'essuie-glace, le piston étant sollicité élastiquement contre le bras par le ressort de rappel, et la chambre étant raccordée à un circuit de gaz qui est en dépression lorsque le moteur du véhicule est en fonctionnement.

Suivant des modes de réalisation de l'invention:
- le circuit de gaz comporte une tubulure d'admission du moteur, ou bien un circuit d'assistance pneumatique de freinage du véhicule muni d'une pompe à vide entraînée par le moteur en fonctionnement ;
- le corps délimite un logement cylindrique pour le piston comportant une première extrémité débouchante traversée par une extrémité externe de contact du piston avec le bras et une seconde extrémité délimitant la chambre prolongée par un embout de raccordement de cette chambre avec la source de gaz en dépression, le ressort de rappel étant interposé entre deux sièges ménagés respectivement dans la seconde extrémité du logement et dans l'extrémité interne du piston qui lui fait face, l'embout de raccordement étant venu de matière avec une partie du corps délimitant la seconde extrémité du logement, fixée sur le reste du corps après montage du piston et du ressort à l'intérieur du logement ;
- le piston comporte une gorge annulaire dans laquelle est logé un joint torique d'étanchéité de la chambre en contact avec le contour du logement ;
- le bras est muni d'un manchon de protection recouvrant sa partie destinée à être en contact avec le piston ;
- le balai est destiné à balayer la surface du pare-brise du véhicule, et le corps est monté sur une grille d'auvent agencée sur la carrosserie du véhicule, à proximité du bord inférieur du pare-brise.

L'invention sera mieux comprise à la lecture de la description détaillée qui va suivre donnée uniquement à titre d'exemple, pour la compréhension de laquelle on se réfèrera aux dessins annexés dans lesquels :
- la figure 1 est une vue en plan d'un balai d'essuie -glace d'un ensemble selon l'invention ;
- les figures 2 et 3 sont des vues en coupe transversale d'un ensemble selon l'invention comportant le balai d'essuie-glace de la figure 1, respectivement dans une position soulevée du bras d'entraînement et dans une position abaissée de ce bras.

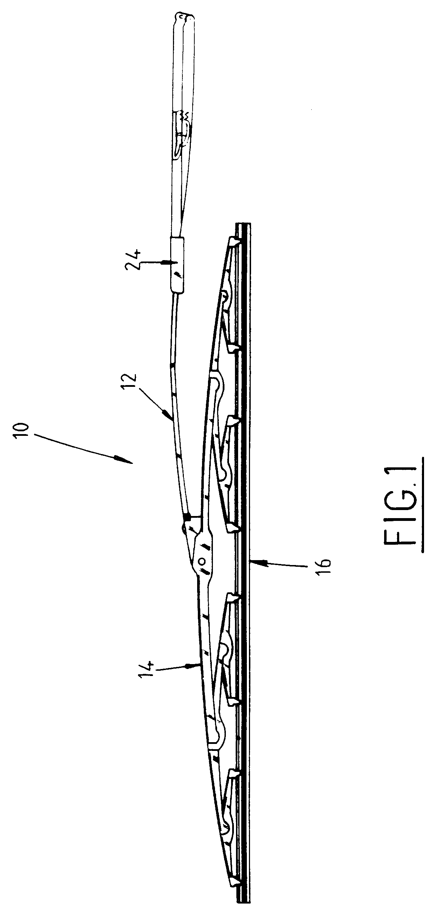

On a représenté à la figure 1 un essuie-glace 10 pour véhicule automobile comportant de façon classique un bras 12 monté articulé sur la carrosserie du véhicule, un balai 14 porté par le bras 12 est muni d'une raclette souple 16 destinée à balayer un secteur de la surface d'une vitre du véhicule, par exemple du pare-brise.

Le bras 12 est relié de façon connue en soi à des moyens de motorisation, non représenté sur les figures, commandés par l'utilisateur.

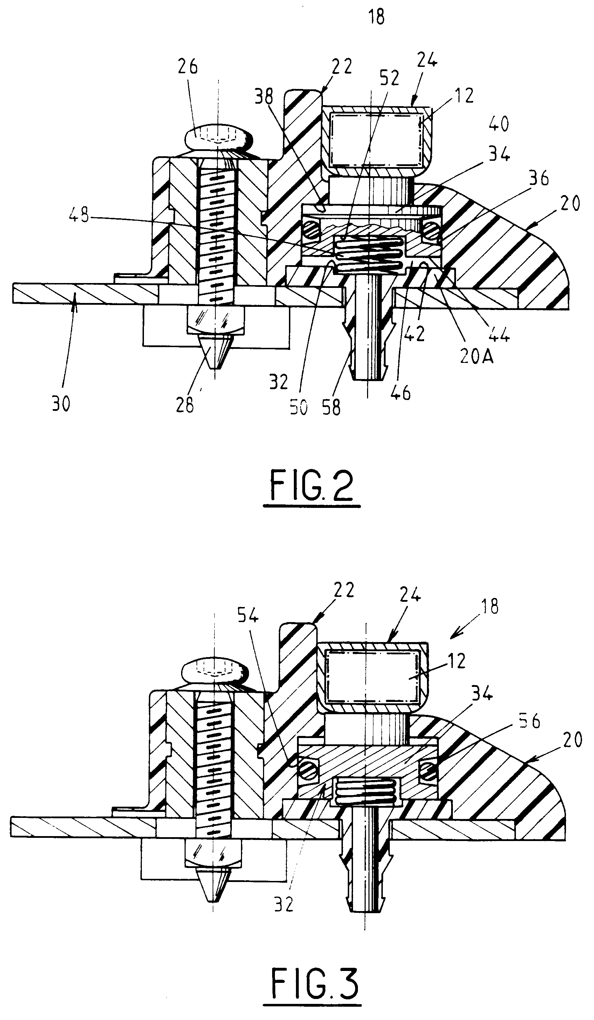

Sur les figures 2 et 3, on a représenté un ensemble 18 selon l'invention comportant l'essuie-glace 10 dont on a uniquement représenté sur ces figures le bras 12 en trait mixte.

Le bras 12, tel qu'il est représenté sur ces figures, est dans une position d'arrêt de l'essuie-glace, à une extrémité du secteur de balayage.

L'ensemble 18 comporte également un corps 20 délimitant une butée 22 de maintien en position d'arrêt de l'essuie-glace. Cette butée 22 est destinée à coopérer avec un manchon de protection 24 entourant le bras 12 de l'essuie-glace, disposé à peu près à la moitié de la longueur de ce bras.

Le corps 20 est fixé de façon connue en soi sur la carrosserie du véhicule. Par exemple, dans le cas d'un essuie-glace destiné à balayer le pare-brise du véhicule, le corps 20 est fixé au moyen d'une vis 26 et d'un écrou 28 classiques sur une grille d'auvent 30 agencée sur la carrosserie du véhicule à proximité du bord inférieur du pare-brise.

L'agencement 18 comporte de plus des moyens de soulèvement du balai d'essuie-glace en position d'usure réduite de la raclette, lorsque l'essuie-glace est à l'arrêt, et des moyens pneumatiques d'abaissement de ce balai en position d'utilisation.

Ces moyens de soulèvement comprennent des moyens de poussée 32 agencés au droit de la position d'arrêt de l'essuie-glace, destinés à solliciter élastiquement le bras 12 de l'essuie-glace de manière à l'écarter de la vitre, comme cela est représenté sur la figure 2.

Les moyens de poussée 32 comprennent un piston 34 monté coulissant dans un logement cylindrique 36 ménagé dans le corps 20, destiné à coopérer avec le manchon de protection 24 entourant le bras 12.

Le logement 36 comporte une extrémité supérieure débouchante 38 traversée par une extrémité externe 40 de contact du piston 34 avec le bras 12 et une extrémité inférieure 42 délimitant, avec l'extrémité interne 44 du piston qui lui fait face, une chambre étanche 46 dont le volume varie en fonction de la position du piston 34.

Un ressort de rappel 48, interposé entre deux sièges 50,52 ménagés respectivement dans l'extrémité inférieure 42 du logement et dans l'extrémité interne 44 du piston, sollicite élastiquement ce piston contre le manchon 24 entourant le bras 12, comme cela est représenté à la figure 2.

Une gorge annulaire 54 est ménagée dans le contour du piston 34 et forme un logement pour un joint torique 56 d'étanchéité de la chambre 46 en contact avec le contour du logement 36.

La chambre étanche 46, dans laquelle est logé le ressort 48, est destinée à communiquer avec une source de gaz en dépression pour solliciter le piston 34 à l'encontre de la force de rappel du ressort de manière à abaisser le bras 12 et le balai 14 en position d'utilisation, comme cela est représenté à la figure 3.

A cet effet, l'extrémité inférieure du logement 36 est prolongée par un embout 58 de raccordement à la source de gaz en dépression.

De préférence, l'embout 58 est venu de matière avec une partie 20A du corps 20 délimitant l'extrémité inférieure 42 du logement, fixée, de façon connue en soi, sur le reste du corps 20 après montage du piston 34 et du ressort 48 à l'intérieur du logement 36.

La chambre étanche 46 est raccordée de préférence à un circuit de gaz qui est en dépression lorsque le moteur du véhicule est en fonctionnement.

Le circuit de gaz est constitué par exemple, dans le cas d'un moteur à essence, par une tubulure d'admission du moteur, et dans le cas d'un moteur diesel, par un circuit d'assistance pneumatique de freinage du véhicule muni d'une pompe à vide entraînée par le moteur en fonctionnement.

Le fonctionnement de l'ensemble de balai d'essuie-glace selon l'invention est très simple.

Lorsque le véhicule est stationné, le moteur étant à l'arrêt, la chambre 46 est à la pression atmosphérique, son volume étant maximal, et le ressort 48 sollicite le piston 34 vers sa position de soulèvement du bras 12 et du balai 14 de l'essuie-glace, si bien que la raclette souple 16 subit une pression réduite par rapport à la pression qu'elle subit pendant le fonctionnement de l'essuie-glace. On réduit ainsi considérablement le vieillissement par déformation de la raclette 16 lorsque le véhicule n'est pas utilisé.

Lorsque le moteur du véhicule fonctionne, la chambre 46 est en dépression, si bien que le piston 34 est déplacé à l'encontre de la force élastique de rappel du ressort 48 vers une position abaissée du bras 12 et du balai 14. Le volume de la chambre 46 est dans ce cas minimal. Le bras d'essuie-glace est donc dans une position normale par rapport à la vitre et le système ne peut engendrer de vibrations pouvant constituer une source de gène pour l'utilisateur.

L'invention comporte de nombreux avantages.

En particulier, les moyens de soulèvement du balai en position d'arrêt sont très simples et les moyens pneumatiques d'abaissement du balai en position d'utilisation comprennent une source de gaz en dépression classique du véhicule.

L'ensemble de balai d'essuie-glace selon l'invention a une structure simple, très fiable et peu coûteuse à réaliser.

## Revendications

1. Ensemble de balai d'essuie-glace pour véhicule automobile, du type comportant :
- un balai (14) porté par un bras d'entraînement (12) articulé sur le véhicule et muni d'une raclette souple (16) destinée à balayer un secteur de la surface d'une vitre du véhicule,
- des moyens (32) de soulèvement du balai (14) dans une position d'usure réduite de la raclette (16) lorsque l'essuie-glace (10) est à l'arrêt, ces moyens de soulèvement comprenant des moyens de poussée (32) comportant un piston (34) monté coulissant dans un corps (20) solidaire du véhicule et sollicité élastiquement par un ressort de rappel (48) de manière à écarter de la vitre le bras (12) de l'essuie-glace, et
- des moyens pneumatiques (46,58) d'abaissement du balai (14) dans une position d'utilisation, destinés à s'opposer aux moyens de poussée, ces moyens pneumatiques comprenant une chambre étanche (46) de volume variable délimitée par le piston (34) et le corps (20), dans laquelle est logé le ressort de rappel (48), destinée à communiquer avec une source de gaz en dépression pour solliciter le piston (34) à l'encontre de la force de rappel du ressort (48),
caractérisé en ce que les moyens de poussée (32) sont agencés sur le véhicule au droit de la position d'arrêt de l'essuie-glace (10), le corps (20) délimitant une butée (22) de maintien en position d'arrêt de l'essuie-glace (10), le piston (34) étant sollicité élastiquement contre le bras (12) par le ressort de rappel (48), et la chambre (46) étant raccordée à un circuit de gaz qui est en dépression lorsque le moteur du véhicule est en fonctionnement.

2. Ensemble selon la revendication 1, caractérisé en ce que le circuit de gaz comporte une tubulure d'admission du moteur.

3. Ensemble selon la revendication 1 ou 2, caractérisé en ce que le circuit de gaz comporte un circuit d'assistance pneumatique de freinage du véhicule muni d'une pompe à vide entraînée par le moteur en fonctionnement.

4. Ensemble selon l'une quelconque des revendications précédentes, caractérisé en ce que le corps (20) délimite un logement cylindrique (36) pour le piston (34) comportant une première extrémité débouchante (38) traversée par une extrémité externe (40) de contact du piston avec le bras (12) et une seconde extrémité (42) délimitant la chambre (46) prolongée par un embout (58) de raccordement de cette chambre avec la source de gaz en dépression, le ressort de rappel (48) étant interposé entre deux sièges (50,52) ménagés respectivement dans la seconde extrémité (42) du logement et dans l'extrémité interne (44) du piston (34) qui lui fait face, l'embout de raccordement (58) étant venu de matière avec une partie (20A) du corps (20) délimitant la seconde extrémité (42) du logement, fixée sur le reste du corps (20) après montage du piston (34) et du ressort (48) à l'intérieur du logement (36).

5. Ensemble selon la revendication 4, caractérisé en ce que le piston (34) comporte une gorge annulaire (54) dans laquelle est logé un joint torique (56) d'étanchéité de la chambre (46) en contact avec le contour du logement (36).

6. Ensemble selon l'une quelconque des revendications précédentes, caractérisé en ce que le bras (12) est muni d'un manchon (24) de protection recouvrant sa partie destinée à être en contact avec le piston (34).

7. Ensemble selon l'une quelconque des revendications précédentes, caractérisé en ce que le balai (14) est destiné à balayer la surface du pare-brise du véhicule, et en ce que le corps (20) est monté sur une grille d'auvent (30) agencée sur la carrosserie du véhicule, à proximité du bord inférieur du pare-brise.

## Claims

1. Screen wiper assembly for a motor vehicle of the type comprising:
- a wiper blade assembly (14) carried by a mounting arm (12) pivoted on the vehicle and provided with a flexible blade (16) designed to wipe a sector of the surface of a window of the vehicle
- means (32) for lifting the blade assembly (14) in a position of reduced wear of the blade (16) when the wiper (10) is parked, these lifting means comprising pushing means (32) in the form of a piston (34) mounted to slide in a body (20) secured to the vehicle and urged resiliently by a restoring spring (48) in such a way as to shift the arm (12) of the wiper away from the glass, and
- pneumatic means (46, 58) for lowering the blade assembly (14) into a position of use, designed to oppose the pushing means, these pneumatic means comprising a sealed chamber (46) of variable volume bounded by the piston (34) and the body (20), in which the restoring spring (48) is mounted, designed to communicate with a source of gas at negative pressure to urge the piston (34) in opposition to the force of the restoring spring (48),
characterised in that the pushing means (32) are mounted on the vehicle in line with the parked position of the wiper (10), the body (20) defining an abutment (22) for maintaining the wiper (10) in the parked position, the piston (34) being urged resiliently against the arm (12) by the restoring spring (48) and the chamber (46) being connected to a gas circuit which is at a negative pressure when the engine of the vehicle is running.

2. Assembly according to claim 1, characterised in that the gas circuit comprises an induction pipe of the engine.

3. Assembly according to claim 1 or 2, characterised in that the gas circuit comprises an auxiliary pneumatic braking circuit of the vehicle equipped with a vacuum pump driven by the engine when it is running.

4. Assembly according to any one of the foregoing claims, characterised in that the body (20) defines a cylindrical recess (36) for the piston (34) having a first open end (38) through which extends an external end (40) of the piston for engaging the arm (12) and a second end (42) defining the chamber (46) prolonged by a spigot (58) for connecting this chamber to the source of gas under negative pressure, the restoring spring (48) being interposed between two seatings (50, 52) provided respectively in the second end (42) of the recess and in the internal end (44) of the piston (34) which faces it, the connecting spigot (58) being integral with a part (20A) of the body (20) defining the second end (42) of the recess, secured to the rest of the body (20) after the piston (34) and the spring (48) have been mounted inside the recess (36).

5. Assembly according to claim 4, characterised in that the piston (34) has an annular groove (54) in which there is mounted a toroidal sealing ring (56) for the chamber (46) in contact with the wall of the recess (36).

6. Assembly according to any one of the foregoing claims, characterised in that the arm (12) is provided with a protective sleeve (24) which covers the part intended to be in contact with the piston (34).

7. Assembly according to any one of the foregoing claims, characterised in that the wiper blade assembly (14) is designed to wipe the surface of the windscreen of the vehicle, and in that the body (20) is mounted on an inlet grille (30) mounted on the bodywork of the vehicle in the neighbourhood of the lower edge of the windscreen.

## Patentansprüche

1. Kraftfahrzeug-Scheibenwischeranlage, bestehend aus:
- einem Wischerteil (14), das an einem an dem Fahrzeug angelenktem Antriebsarm (12) sitzt und mit einem weichen Wischerblatt (16) versehen ist, das über einen Sektor der Oberfläche einer Fahrzeugscheibe wischt,
- Mitteln (32) zum Anheben des Wischerteils (14) in eine Position mit reduzierter Abnutzung des Wischerblattes (16), wenn der Scheibenwischer (10) arretiert ist, wobei diese Mittel zum Anheben aus Stoßorganen (32) mit einem Kolben (34) bestehen, der in einem mit dem Fahrzeug verbundenen Körper (20) gleitend gelagert ist und durch eine Rückstellfeder (48) derart elastisch beeinflußbar ist, daß der Arm (12) des Scheibenwischers von der Scheibe entfernbar ist, und
- pneumatischen Mitteln (46,58) zum Absenken des Wischerteils (14) in eine Arbeitslage, die auf die Stoßorgane wirken und aus einer dichten Kammer (46) mit variablem Volumen bestehen, wobei die Kammer, in der die Feder (48) sitzt, durch den Kolben (34) und den Körper (20) begrenzt wird und mit einer Gasquelle mit Unterdruck zusammenwirkt, um den Kolben (34) entgegen der Kraft der Feder (48) zu beeinflussen,
dadurch gekennzeichnet, daß die Stoßorgane (32) in gerader Ausrichtung zu der Arretierposition des Scheibenwischers (10) am Fahrzeug angeordnet sind, daß der Körper (20) einen Anschlag (22) zum Halten des Scheibenwischers (10) in der Arretierposition bildet, daß der Kolben (34) elastisch gegen den Arm (12) durch die Rückstellfeder (48) wirkt und daß die Kammer (46) mit einem Gaskreis verbunden ist, der unter Unterdruck steht, wenn der Motor des Fahrzeuges läuft.

2. Anlage nach Anspruch 1, dadurch gekennzeichnet, daß der Gaskreis einen Rohransatz für eine Verbindung zum Motor aufweist.

3. Anlage nach Anspruch 1 oder 2, dadurch gekennzeichnet, daß der Gaskreis einen pneumatischen Hilfskreis für die Bremsen des Fahrzeuges aufweist, der mit einer Pumpe zur Schaffung eines Unterdruckes, angetrieben durch den Motor, verbunden ist.

4. Anlage nach einem der vorstehenden Ansprüche, dadurch gekennzeichnet, daß der Körper (20) eine zylindrische Aufnahme (36) für den Kolben (34) bildet, daß die Aufnahme ein erstes Ende (38) mit einer Öffnung, durch die ein äußeres Ende (40) des Kolbens für dessen Kontakt mit dem Arm (12) hindurchgeht, und ein zweites Ende (42) aufweist, das die Kammer (46) begrenzt und durch ein Verbindungsstück (58) zwischen dieser Kammer und der Unterdruck-Gasquelle verlängert ist, wobei die Rückstellfeder (48) zwischen zwei Sitzen (50,52) sitzt, die im zweiten Ende (42) der Aufnahme und in dem inneren Ende (44) des Kolbens (34), der ihr zugewandt ist, eingearbeitet sind, und das Verbindungsstück (58) zum Teil (20A) aus dem Material des Körpers (20) besteht, das zweite Ende (42) der Aufnahme bildet und an dem Rest des Körpers (20) nach dem Einbau des Kolbens (34) und der Feder (48) in der Aufnahme (36) befestigt ist.

5. Anlage nach Anspruch 4, dadurch gekennzeichnet, daß der Kolben (34) eine Ringnut (54) aufweist, in welcher sich eine Ringdichtung (56) für die Kammer (46) befindet, die in Kontakt mit der Wand der Aufnahme (36) ist.

6. Anlage nach einem der vorstehenden Ansprüche, dadurch gekennzeichnet, daß der Arm (12) mit einer Schutzmuffe (24) versehen ist, die diejenige Partie bedeckt, die in Kontakt mit dem Kolben (34) treten kann.

7. Anlage nach einem der vorstehenden Ansprüche, dadurch gekennzeichnet, daß das Wischerteil (14) dazu dient, die Oberfläche der Windschutzscheibe zu wischen, und daß der Körper (20) am Luftgrill (30) der Karosserie des Fahrzeuges in der Nähe des unteren Randes der Windschutzscheibe angebracht ist.
